# EUROPEAN PATENT APPLICATION

(11) **EP 2 073 170 A1**
(43) Date of publication of application: **24.06.2009**
(21) Application number: 07123397.7
(22) Date of filing: 17.12.2007
(51) Int. Cl.: G06T 5/40

(54) **Image processing apparatus and method with contrast correction.**

(71) Applicant: Nederlandse Centrale Organisatie Voor Toegepast Natuurwetenschappelijk Onderzoek TNO, 2628 VK Delft (NL)
(72) Inventor: Dijk, Judith, 2497 AN Den Haag (NL); Schutte, Klamer, 2725 ES Zoetermeer (NL)
(74) Representative: Hatzmann, Martin

(57) **Abstract**

An image processing apparatus collects local image statistics to determine parameters for contrast correction. The statistics for a pixel location is collected from pixel values for surrounding pixel locations. The weight assigned to contributions from surrounding is reduced when image gradients are detected between the pixel location and the surrounding pixel locations. Pixel values are mapped under control of statistical data.

## Description

### Field of the invention

The invention relates to an image processing apparatus and method with contrast correction.

### Background

US patent No. 4,231,065 discloses a contrast enhancement scheme for a video display. A two dimensional recursive filter is used to obtain a moving average of the intensity variations in all areas of the display. This moving average is subtracted from the original signal to produce a signal which contains only local variations and this latter signal is expanded to increase the display contrast. Similar results can be obtained by known histogram equalization schemes. Herein, histograms of pixel values are computed for different areas, and from the histograms mapping functions are derived that map pixel values to enhanced values with optimal contrast.

This type of system increasingly expands the differences in intensity values when there is less intensity variation in the area over which the average or histogram is computed. Typically, the intensity variation may be an edge between different types of image regions. The weaker the edge, the more the differences are expanded, so that the edge becomes more clearly visible. Such enhancement schemes require the selection of a scale parameter that controls the size of the areas over which the moving average or histogram is formed. Dependent on the selected scale parameter, the results of contrast enhancement may differ. When the scale parameter increased so that there is a strong edge in the area, weaker edges will be insufficiently expanded. When the scale parameter decreased until there is no real edge in an area, noise will become dominantly visible. Usually, no single value of the scale parameter yields optimum results everywhere in an image.

K Schutte has proposed to perform averaging for a plurality of different scale parameter values in an article titled "Multi-scale adaptive gain control of IR images" and published at Infrared Technology and Applications XXIII, part of SPIE's Aerospace '97, April 21-25 1997, Orlando FL, SPIE Vol 3061.

However, irrespective of whether a multi-scale approach is used, it has been found that this type of contrast enhancement technique may sometimes lead to disturbing artefacts near the edges of large imaged objects.

### Summary

Among others, it is an object to provide for contrast enhancement of images wherein disturbing artefacts near edges are reduced.

An image processing apparatus according to claim 1 is provided. Herein a pixel value mapper, such as a contrast corrector, is controlled by statistical data from a statistics collector. In an embodiment the statistics collector may estimate statistical data representing an average and standard deviation of pixel values in respective areas. For respective pixel locations, the statistics weighs contributions of particular ones of the surrounding pixel locations to the set of statistical data with reduced weight when detecting gradients between the respective pixel location and the particular ones of surrounding pixel locations. Gradients may be detected for example using edge detecting filters, or by detecting a difference between the pixel value of the respective pixel location and the pixel value for the particular one of the surrounding pixel locations. When no gradient is detected a higher weight is given. In this way, the effect of pixel locations beyond edged on pixel mapping is reduced.

In an embodiment the statistics collector comprises an edge preserving low pass filter arrangement, to compute the sets of statistical data.

### Brief description of the drawing

These and other advantageous aspects will become apparent from a description of exemplary embodiments, using the following figures.
Figure 1 shows an image processing system
Figure 1a shows an image processing system
Figure 2 shows a statistics collector
Figure 3 shows an edge preserving filter
Figure 4 shows an image processing system
Figure 5 shows an image processing system

### Description of exemplary embodiments

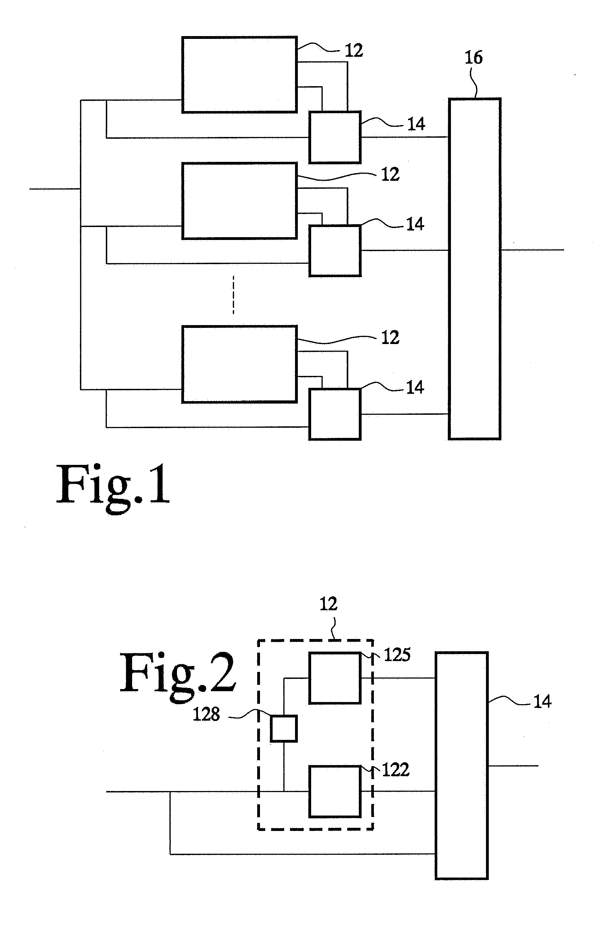

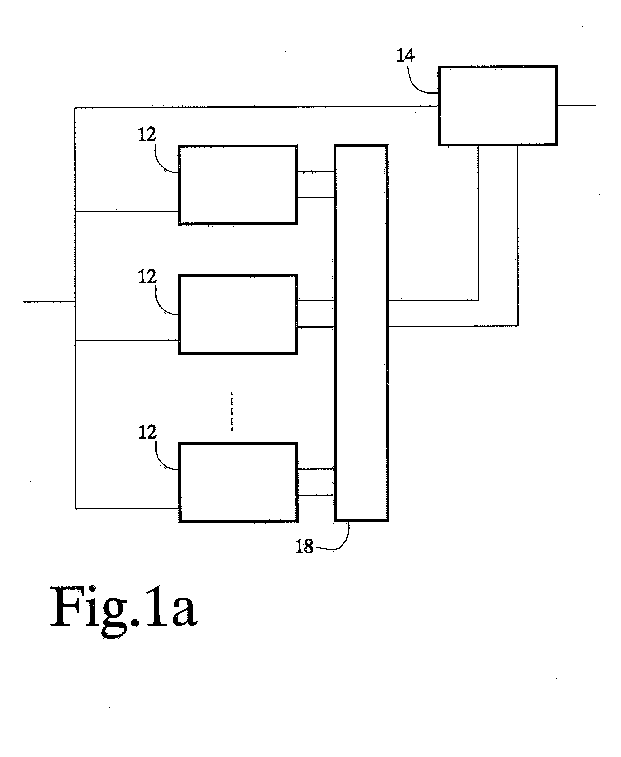

Figure 1 shows an image processing system comprising a plurality processing branches and combination unit 16. Each processing branch contains a statistics collector 12, a pixel value mapper in the form of a contrast corrector 14 and a combination unit 16.

In each branch an image input is coupled to the statistics estimator 12 of the branch. Outputs of the statistics collector 12 of the branch are coupled to control inputs the contrast corrector 14 of the branch. Furthermore, the contrast corrector 14 has an input coupled to the image input of the system. Outputs of the contrast correctors 14 of the branches are coupled to combination unit 16.

In operation statistics collectors 12 compute statistical parameters from spatial areas in received images. Each branch corresponds to a spatial area of a different spatial scale. The spatial scales may be selected for example at fixed ratio's, the first branch supporting a scale W, the second branch having a scale r*W, the third bandwidth having a scale r²*W. Herein that ratio r may be 2 or 3 for example. By way of example three branches are shown for three different scales, but two or more may be used for a corresponding number of different scales.

Statistics collectors 12 weighs contributions to the statistical parameter from different positions in an area according to whether a gradient is detected between the position and the centre of the area. In one embodiment the statistical data may comprise locally averaged intensities and locally averaged square intensities. The implementation of statistics collectors 12 of different branches may be similar to each other, except that each statistics collector 12 operates to collect statistical data from differently sized areas in the image, the sizes being selected in proportion to the scale of the branch to which the statistics estimator belongs.

Contrast corrector 14 uses the statistical data from statistics collectors 12 to determine pixel mapping functions, which it applies to the incoming image.

Combination unit 16 combines the images produced by contrast correctors 14. In a further embodiment combination unit 16 also combines these images with the original input image. In an embodiment, combination unit 16 is configured to add these images, but other ways of combining may be used, such as weighted adding, taking a median of pixels values from different images, or taking a maximum etc.

Figure 1a shows an alternative image processing system, wherein the contrast correction parameters are first combined in a parameter combination unit 18 and subsequently applied to a single contrast corrector 14, to correct the image in one step. In this case no image combination unit 16 is needed.

Figure 2 shows an embodiment of a statistics collector 12 comprising first and second edge preserving low pass filters 122, 125 and a squaring unit 128. Squaring unit 128 may be shared with the statistics collectors of other branches. The image input is coupled to an input of first edge preserving filter 122. The image input is coupled to an input of second edge preserving filter 125 via squaring unit 128.Outputs of first and second edge preserving filters 122, 125 are coupled to contrast corrector 14.

In operation first and second edge low pass preserving filters 122, 125 produce a spatial averaged M of intensity values I of pixels and spatially averaged squared intensity values I² respectively. This is repeated for successive pixel locations, each by averaging intensity values I and squared intensity values I² respectively, from an area including the pixel location at a predetermined position in the area. Contrast corrector 14 computes a standard deviation value S for the pixel locations from these values and computes transformed output pixel values Q according to Q=M+F*(P-M)/S, wherein P represents input pixel values and F is an enhancement factor. If this leads to output pixel values Q outside an allowable range, the values are clipped. Similarly, if the overall factor F/S is outside a predetermined range it may be clipped to a value at the edge of the range.

It should be appreciated that the contrast correction formula Q=M+F*(P-M)/S is only one example of a range of possible contrast correction formulas. As another example a formula Q=M+f((P-M)/S) may be used, wherein "f" is any increasing or function of (P-M)/S, or at most a generally increasing and locally flat function. For example a function f=[1+(P-M)/S]^{g}-1, or f=sign(P-M)* |(P-M)/S|^{g} may be used, where the exponent g may have any value. As another example a clipped function f may be used, which takes on a saturation value when (P-M)/S is more than a threshold distance from zero. As yet another example contrast may be corrected according to Q=P+F*P/M-F, where F is a predetermined factor. In this case, an estimate of the standard deviation S is not needed. This simplifies the correction, but it makes the correction less responsive to image content.

Furthermore, it should be appreciated that the average and the standard deviation of intensity values are only one example of local statistical parameters that can be estimated to control contrast correction. Instead of intensity a color component or a combination of color components may be used. Instead of the average and standard deviation, a maximum MAX and minimum MIN of the intensity or color in a window may be determined. In this case a correction Q=M+f((P-M)/(MAX-MIN)) may be applied, where M=(MAX+MIN)/2. Herein the function f may be a factor (f=F*(P-M)/(MAX-MIN)) or some other generally increasing function that may be locally flat. Instead of the maximum and the minimum percentile functions may be used, taking the intensity values in a window at predetermined ranks according to size of the intensity values in the window. Similarly the instead of an average of the square pixel value an average of a power Pⁿ of the intensity values, or another function, in a window may be used to estimate a scale parameter instead of the standard deviation. When this power is large, the effect is that the use of maxima and minima is approximated.

In the embodiment of figure 1a the effect of the corrections from different branches is combined before correction of the image. Thus, for example if the correction of a pixel for each single branch is Q=M+F*(P-M)/S, with different M and S values for different branches, a composite correction may be defined that corresponds to substitution of the result Q of each branch in the input value P of the next branch. Together, such substitutions define a compound correction which is also of the form Q=M+F*(P-M)/S, with M and S dependent on the M and S values of the different branches. In this case these final M and S values may be used to correct the pixel value.

In one embodiment edge preserving low pass filters 122, 125 apply bilateral filtering. In another embodiment edge preserving filters 122, 125 apply anisotropic diffusion. Bilateral filtering is known per se from C. Tomasi and R. Manduchi, "Bilateral Filtering for Gray and Color Images", Proceedings of the 1998 IEEE International Conference on Computer Vision, Bombay, India. Anisotropic diffusion per se is known from an article titled "Scale space and edge detection using anisotropic diffusion", by P. Perona et al. and published in the IEEE transactions on pattern analysis and machine intelligence, Vol. 12 (July 1990) page 629-639.

When anisotropic diffusion is used, for example, edge preserving filters 122, 125 may be configured to compute the average in a series of iterative steps, wherein a series of successive processed images is formed. The initial processed image in this series is the input image, or its square. In each but the first processed image, the pixel value at respective pixel locations is the weighted sum of pixel values from the preceding processed image at pixel locations that surround the respective pixel location plus the pixel value from the preceding processed image at the respective pixel location. Herein the weight of a pixel values from each surrounding pixel location is taken dependent on the gradient size at the surrounding pixel location, or between the surrounding pixel location and the respective pixel location. The weight is taken as a function of the gradient that decreases towards zero with increasing gradient. Pixel values from the final image in the series are fed to contrast corrector 14.

When bilateral filtering is used, for example, edge preserving filters 122, 125 may be configured to compute the average for respective pixel locations each by weighted summing pixel values from surrounding pixel locations in an area surrounding the respective pixel location. Herein the weight used for a surrounding pixel location is made a function of the difference between the pixel value for the respective pixel location and the pixel value of the surrounding pixel location. The function decreases to zero with increasing difference between the pixel values. Additionally, the weight may depend on the distance between the respective pixel location and the surrounding pixel location.

This form of filtering may be applied both to pixel intensities and their squares. Alternatively, they may be applied to any other function of the pixel intensities or to color components. Also, when taking a percentile near the minimum or maximum, weights may be applied according to the presence of edges. In this case the intensity values from a window are ranked and a value is taken so that the sum of the weights of lower ranking values is equal to or next lower than a predetermined fraction of the sum of the weights of all values.

The use of edge preserving filtering to control contrast correction is based on the insight that perceivable artifacts arise near edges of large homogeneous image areas. On one hand contrast scaling parameters for such areas for such areas need to be computed from filtering at a large spatial scale, to prevent missing large scale contrasts. On the other hand such a large spatial scale conventionally also affects pixel values outside the object, which gives rise to artifacts. By using edge preserving filtering to estimate the statistical parameters for use in contrast enhancement, the effect of contrast enhancement is realized while reducing these artifacts.

It must be noted that this is contrary to the conventional notion that contrast enhancement serves to make edges better visible. According to this conventional notion contrast across edges should be the first thing to include in the computation of contrast enhancement parameters, because edges would not be emphasized otherwise. The present concept of weighing statistics on the opposite side of an edge less, or not at all it is avoided that contrast could become perceptively overemphasized far from the edge. By using edge limiting, different statistics will be used on different sides of the edge. This prevents the overemphasis.

Edge preserving filters 122, 125 may be implemented in various ways. Filter output values of edge preserving filters 122, 125 represent averages of pixel values. Gradient detectors may be used to block or reduce contribution of input values for first pixel locations to an averaged output value for a second pixel location when a pixel value gradient is detected between a first pixel location and the second pixel location. The amount of reduction of the contribution may be controlled by the strength of the gradient.

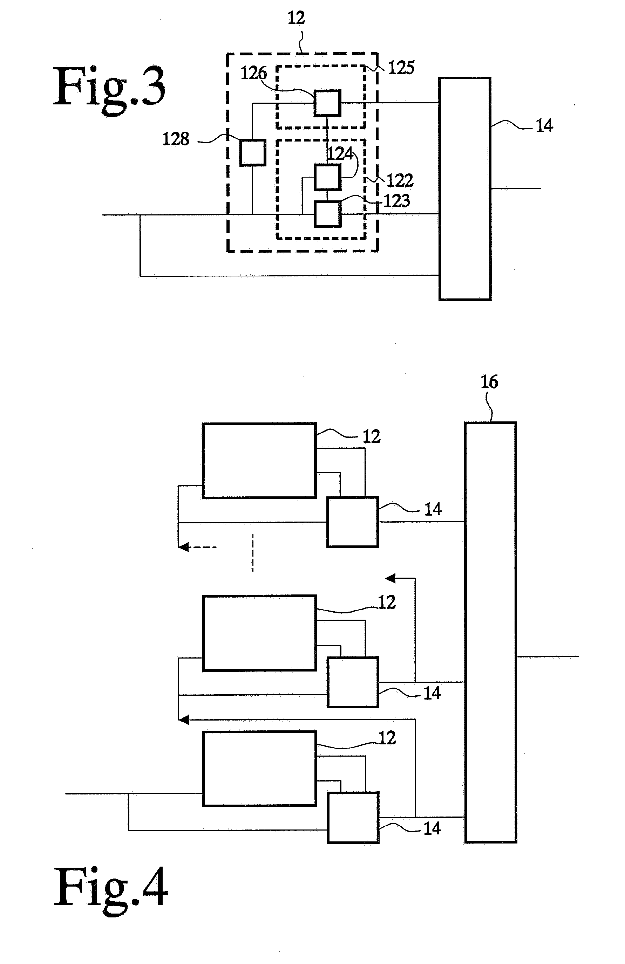

Figure 3 shows an embodiment of edge preserving filters 122, 125, comprising a weight selector 124 that comprises a gradient detector, and wherein each edge preserving filter 122, 125, furthermore comprises a controlled averager 123, 126. The image input is coupled to an input of weight selector 124 and controlled averager 123 of first edge preserving filter 122. Furthermore, the image input is coupled to an input of squaring unit 128, which has an output coupled to controlled averager 127 of second edge preserving filter 125. Weight selector 124, is coupled to further inputs of controlled averagers 123, 126. The control inputs of contrast correctors 14 are coupled to the outputs of controlled averagers 127.

In operation weight selector 124 determines gradient strengths in the filter image and selects weights dependent on the gradient strengths. An array of weights for locations surrounding a central pixel location is selected, dependent on the gradients strengths (e.g. the maximum gradient strength) between central pixel location and the surrounding pixel location for which the weight is selected. The weight is selected to decrease towards zero with increasing gradient strength. The selected weights are output to controlled averagers 127. Controlled averagers 127 average input values from image input and from squaring unit 128 respectively, to form averages for the central pixel location weighting contributions from the surrounding pixel locations according to the weights determined by weight selector 124.

Although a single weight selector 124 is shown, it should be realized that separate weight selectors may be used selecting the weights for example based on the input image and the output of squaring unit 128 respectively, for controlled averagers 123, 126 of first and second edge preserving filter 122, 125 respectively.

Although an embodiment has been described wherein different units are used to perform operations such as squaring and edge preserving filtering, it should be understood that the units may be realized by means of a programmable computer and corresponding programs of instruction stored in the program memory of the computer. Alternatively, dedicated hardware units may be used. Also the same unit may be used to perform a number of different edge preserving filtering operations.

Furthermore, although an embodiment has been described wherein the average intensity M and average squared intensity as a function of pixel position are computed as statistic parameters for controlling contrast correction, it should be understood that other statistical parameter may be used. For example, instead of the square of input image values, a square of a difference between the input image values and the average intensity values may be computed and used for determining an average variance. Instead of intensity values color components may be used or color vectors or any other vectors for pixel locations. In this case the average squares of components of the vectors may be computed for example.

Instead of the average and standard deviation of intensity values other statistical properties may be used, such as a histogram. In this case edge preserving filters 122, 125 may be replaced by other units, which compute the relevant statistical properties, limiting the contribution to the statistical property for a pixel location from other pixel locations when a gradient is detected between the pixel location and the other pixel locations. Thus for example, instead of edge preserving filters 122, 125 a statistics collector 12 may comprise a histogram computation unit, which is configured to compute a histogram of pixel values of surrounding pixels for each respective pixel location. In this case the histogram computation unit adds weighted counts to the histogram, with wherein the contribution of the surrounding pixel locations to the histogram is weighted according to detected edge strength between the respective pixel location and the surrounding pixel location. In this embodiment contrast corrector 14 may be configured to select the pixel mapping that is expected to transform the histogram in a direction towards a predetermined desired histogram.

Figure 4 shows an embodiment wherein contrast correction in different branches is applied each time to the output of a preceding branch that performs statistical parameter estimation at a smaller scale. The smallest scale branch uses the original input image.

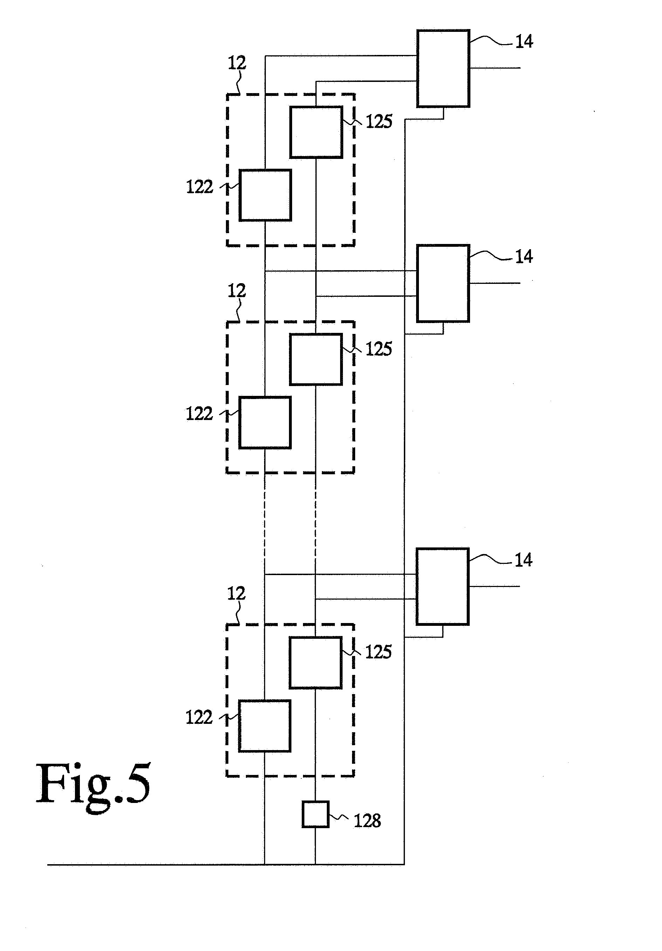

Figure 5 shows an embodiment wherein edge preserving filters 122, 125 are chained in two chains, one for averaging pixels and another for averaging squared pixels. Along a first chain, starting from the image input, edge preserving filters 122 for successively larger spatial scale are included for averaging intensity. Squaring unit 128 is coupled between the image input and the input of a second chain that contains, edge preserving filters 125 for averaging squared intensity at successively larger spatial scale, starting from the input. The chains are tapped to provide control signals for the outputs of the contrast correctors 14. Contrast correctors 14 may be coupled to a combination unit 16 (not shown). In another embodiment contrast correctors 14 may be chained, the contrast correctors 14 for respective spatial scales except the smallest spatial scale each correcting the contrast of the image produced by the contrast corrector for the next smaller spatial scale.

Although an embodiment has been shown wherein a plurality of branches is used, it should be appreciated that alternatively a single branch may be used. In this way a scale dependent contrast correction is obtained that is less prone to contain artefacts due to edges. Optionally the scale may be selected adaptively dependent on image content (e.g. inversely proportional to the spatial frequency at maximum spectral density). Use of a plurality of branches has the advantage that this makes the correction less sensitive to scale of objects in images.

Although all processing may be performed at the same spatial sampling rate, it should be appreciated that processing speed can be increased, or the demands on hardware can be reduced by sub-sampling at selected positions. In an embodiment each statistics collector 12 may sample statistical data only for sub-sampled positions in the image, at a sub-sample rate in proportion to the spatial scale of the branch to which the statistics estimator belongs. However, use of the same sample rate in all branches has been found to produce better results. Similarly, the pixel positions from which data is used to estimate the statistical parameters may be taken at the maximum sample rate or from sub-sampled pixel positions. In the embodiments of figure 4 and 5 for example, successive statistics collectors 12 along the chain may operate at successively lower sample rate.

Although an embodiment has been shown with a contrast corrector 14, it should be realized that pixel value mappers for any other pixel mapping may be used. For example, instead of contrast, other properties defined for an array of pixel locations such as color saturation, or depth information, may be corrected in this way. The pixel value mapper may be implemented in any way, for example as an arithmetic computation circuit for performing the relevant computations with the pixel value and the inputs from statistics collector 12 as parameters, or using a look-up memory, that is addressed by the pixel value and wherein mapped pixel values are written dependent on information from statistics collector 12, or by means of a program of instructions executed by a programmable processor to perform this type of mapping operations.

## Claims

1. An image processing apparatus, comprising
- a statistics collector, with a collector input for receiving pixel values derived from an input image and configured to collect sets of statistical data, each for a respective pixel location in the input image, from the pixel values for surrounding pixel locations that surround the respective pixel location, the statistics collector being configured to weigh contributions of particular ones of the surrounding pixel locations to the set of statistical data with reduced weight when detecting gradients between the respective pixel location and the particular ones of surrounding pixel locations;
- a pixel value mapper with an image input and control inputs for receiving the sets of statistical data and configured to map pixel values for the respective pixel locations from the image input with mapping functions that are controlled by the sets of statistical data for the respective pixel locations.

2. An image processing apparatus according to claim 1, wherein the statistics collector comprises an edge preserving low pass filter arrangement, configured to compute the sets of statistical data by low pass filtering the pixel values derived from the input image and information that defines squares of the pixel values derived from the input image.

3. An image processing apparatus according to claim 1, wherein the pixel value mapper is configured to stretch or compress pixel value variations from a range containing an average pixel value derived from the statistical data, with a factor proportional to a standard deviation derived from the statistical data.

4. An image processing apparatus according to claim 1, wherein the statistics collector and the pixel value mapper are part of a first branch, the apparatus comprising a plurality of branches including the first branch, each respective branch comprising a respective statistics collector and a respective pixel value mapper, each branch being associated with a respective spatial scale, the respective statistics collector of the branches each being configured to collect sets of statistical data, each set for a respective pixel location in the input image, from the pixel values for surrounding pixel locations in a respective area that surrounds the respective pixel location, the respective areas of the statistics collectors of different branches having mutually different sizes measured in the input image, in proportion to the scales associated with the branches.

5. An image processing apparatus according to claim 4, wherein the statistics collectors of the respective branches are coupled in a chain, each statistics collector, except for the statistics collector associated with the smallest spatial scale, receiving the sets of statistical data from the statistics collector associated with a next lower one of the spatial scales as input for the collection of statistics.

6. A method of processing an image, wherein a pixel value of an output image at a first pixel location is computed by applying a pixel value mapping function to a respective pixel value of an input image, the method comprising selecting the pixel value mapping function using the steps of
- collecting a set of statistical data, for the first pixel location in the input image, from pixel values derived from the input image for surrounding pixel locations that surround the first pixel location, contributions for respective ones of the surrounding pixel locations to the set of data being weighted with reduced weight when a gradient is detected between the first pixel location and the respective ones of the surrounding pixel locations;
- defining the pixel value mapping function for the first pixel location based on the set of statistical data for the first pixel location.

7. A method according to claim 6, wherein the step of collecting statistical data comprises performing edge preserving filtering operations on pixel values and information that defines squares of pixel values.

8. A method according to claim 7, wherein the pixel value mapping function is defined to stretch or compress pixel value variations around an average pixel value derived from the statistical data with a factor proportional to a standard deviation derived from the statistical data.

9. A method according to claim 8, comprising
- performing the step of collecting sets of statistical data for the first pixel location a plurality of times for mutually differently sized areas of surrounding pixel locations respectively,
- defining a plurality of pixel value mapping functions for the first pixel location, based on the sets of statistical data for the respective areas respectively;
- applying the plurality of pixel value mapping function to the first pixel value of the input image, or respective input images derived from a common source image.
